# EUROPEAN PATENT SPECIFICATION

(11) **EP 3 536 462 B1**
(45) Date of publication and mention of the grant of the patent: **25.11.2026**
(21) Application number: 19153884.2
(22) Date of filing: 28.01.2019
(51) Int. Cl.: B25F 5/00, B24B 23/00, B27B 19/00

(54) **ELECTRIC TOOL**
ELEKTROWERKZEUG
OUTIL ÉLECTRIQUE

(30) Priority: 07.03.2018 JP 2018041146
(43) Date of publication of application: 11.09.2019
(73) Proprietor: NEXRA Field Works Co., Ltd., Osaka 571-8686 (JP)
(72) Inventor: NISHII, Kazuhiko, Osaka-shi,, Osaka 540-6207 (JP); MAEDA, Hiroshi, Osaka-shi,, Osaka 540-6207 (JP)
(74) Representative: Müller-Boré & Partner Patentanwälte PartG mbB

(56) References cited:
- EP-A1- 2 554 335
- JP-A- 2013 066 960
- JP-A- 2014 091 176
- US-A1- 2013 002 175
- US-A1- 2017 239 803
- US-B1- 6 286 609
- US-B1- 8 076 873

## Description

### Technical Field

The present disclosure relates generally to electric tools and, more particularly, to an electric tool equipped with a tip blade configured to be rotated back and forth (oscillated or reciprocated).

### Background Art

As an example of electric tools equipped with a tip blade configured to be rotated back and forth, Document 1 (e.g., JP 2017-80827 A) discloses an electric tool. The electric tool described in Document 1 is configured to rotate a tip blade back and forth around an axis of a spindle thereof at a predetermined angle of oscillation. The electric tool includes an electric motor as a drive source, and a battery mounting part that allows a battery pack as a power source to be attached to. The tip blade can be replaced, and various tip blades can be attached according to working contents.

The electric tool described in Document 1 is used in various work such as work of cutting plasterboards (or wallboards) or work of removing tiles. In such a work site, when the tip blade wears and its sharpness decreases, a worker replaces the worn tip blade with a new one and continues the work at the work site. However, unless having a new tip blade for replacement, the worker can neither replace the worn tip blade with a new one nor continue the work.

US 8 076 873 B1 describes hybrid power equipment comprising a user-selectable power selection switch for switching between DC or AC power, a boost and conserve feature for increasing speed of the working elements as necessary, and a motor or a plurality of motors for moving working elements. Running the OPE at the conserve setting prolongs battery pack duration per charge. The motor may comprise a dual coil commutator configuration. Power supply and control systems allow the user to select operation of the plurality motors or dual coil commutators in either series or parallel configuration depending on the power source.

US 2017/239803 A1 describes a work tool which performs a prescribed operation on a workpiece by driving a tool accessory. The work tool has an inner housing that houses a motor and a spindle, an outer housing and an elastic member. A first inner housing element and a second inner housing element are assembled while being opposed to each other in a transverse direction, and a first outer housing element and a second outer housing element are assembled while being opposed to each other in a vertical direction.

JP 2014 091 176 A describes an electric power tool includes an input terminal for an overdischarge protection signal that contacts an output terminal for an overdischarge protection signal of a secondary battery and acquires an overdischarge protection signal from the secondary battery; and control means that acquires, through the input terminal for overdischarge protection signal, information about time constant of a RC circuit connected to the output terminal for the overdischarge protection signal in the secondary battery and identifies the type of the secondary battery based on the information about the time constant.

EP 2 554 335 A1 describes an electric power tool that is included in a plurality of types of electric power tools. The plurality of types of electric power tools comprises a plurality of types of battery packs having different rated output voltages and a plurality of types of tool bodies, the housings of which are equipped with an attached part on which each of the battery packs is mounted in a freely removable manner. The attached part possessed by the plurality of types of tool bodies equipped with motors having different voltage characteristics is formed so as to be able to mount an arbitrary one of the plurality of types of battery packs having different rated output voltages. This makes it possible to widen the range of available battery packs and enhance convenience.

US 6 286 609 B1 describes a dual-mode system for inexpensively operating electrically powered double-insulated devices, such as hand-held power tools and appliances. The system includes a cordless battery power module that supplies the power and current demands of the device in a cordless mode or a chopper module that supplies the necessary power and current demands in a physical envelope commensurate in size and interchangeable with that of the battery power module. The chopper module is provided with a non-filtered high efficiency converter circuit that allows the chopper module to generate the power and current required by the driven device. The inductance of the motor for the driven device is used to filter the output of the chopper module. Eliminating the output filter from the chopper module significantly reduces the cost and size of the module. Additionally, the need for multiple battery packs and fast rechargers is minimized by the availability of a low-cost converter. The line power module includes an EMI filter for filtering AC or DC input power. The chopper module chops the filtered voltage, providing a series of voltage pulses having a DC voltage level that is suitable for driving the motor.

JP 2013 066960 A discloses an electric tool powered by a detachable battery pack that includes a rated-voltage storage element (memory or resistor). The tool's control unit reads this voltage information and selects a corresponding motor-temperature-threshold from a memory table. If the motor temperature exceeds the selected threshold, the controller limits motor output. When the battery's voltage cannot be identified, the system defaults to the highest-voltage threshold. The tool also features a motor-temperature sensor, a variable-speed switch, and a power-switch that can be PWM-controlled, enabling safe operation across battery packs with different rated voltages.

### Summary of Invention

The present disclosure has been achieved in view of the above circumstances, and an object thereof is to provide an electric tool capable of improving the sharpness of a tip blade without replacing it.

The underlying technical problem is solved by an electric tool having the features of independent claim 1. Additional embodiments are defined in the dependent claims.

The electric tool of the present disclosure is able to improve the sharpness of the tip blade without replacing it.

### Brief Description of Drawings

FIG. 1 is a side view of an electric tool according to an embodiment of the present disclosure;
FIG. 2 is a back view of the electric tool;
FIG. 3 is a side view showing an example of use of the electric tool;
FIG. 4 is a perspective view of the electric power tool equipped with a battery pack as viewed from obliquely below;
FIG. 5A is a side view of the electric tool placed in a standing position;
FIG. 5B is a side view of an electric tool body of the electric tool with the electric tool body placed in a standing position;
FIG. 6A is a perspective view of a battery mounting part of the electric tool body as viewed from obliquely below;
FIG. 6B is a perspective view of the battery pack as seen obliquely from above (as seen from a side of a battery side attached part of the battery pack);
FIG. 7 is a sectional view of an upper part of the electric tool; and
FIG. 8 is a block diagram of functional blocks of the electric tool.

### Description of Embodiments

An electric tool according to an embodiment will hereinafter be explained. The embodiment below is merely an example of various embodiments of the present disclosure. Various modifications in the embodiment below are possible in light of general arrangement and the like as long as an object of the present disclosure is achieved. For convenience of explanation, forward (F), backward (B), leftward (L), rightward (R), upward (U) and downward (D) directions in the explanation below are used. It is however not intended to define the usage directions of an electric tool according to the embodiment.

### (1) Embodiment

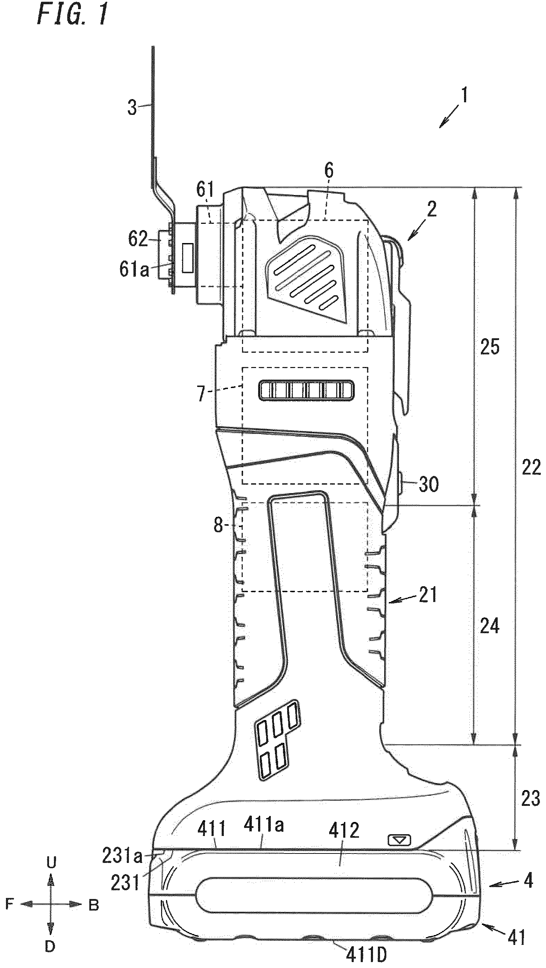

An electric tool (or power tool) 1 according to the present embodiment will be explained with reference to FIGS. 1 to 8.

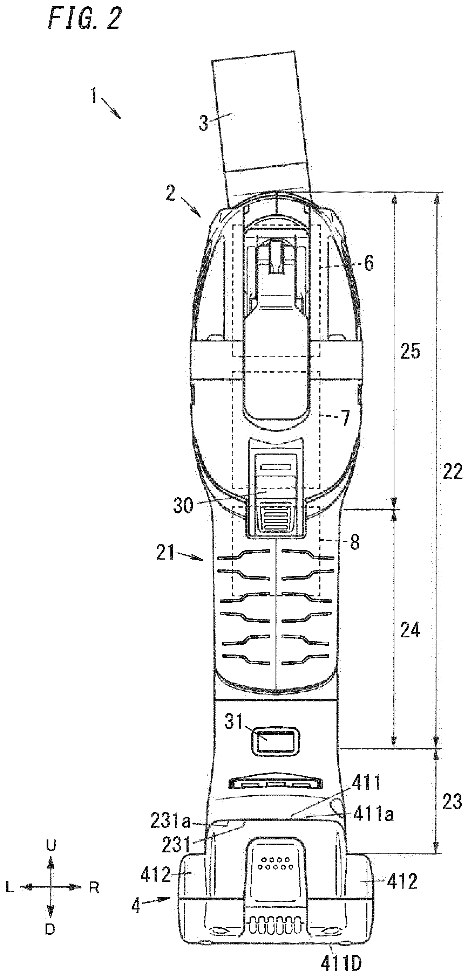

As shown in FIGS. 1 and 2, the electric tool 1 is composed of a hand-held multi-tool (oscillating multi-tool). The multi-tool is an electric tool that allows a tip blade (also called a tip tool, an attachment or an accessory) to be replaced with any one of various tip blades according to work content and that is configured so that the tip blade is rotated back and forth (oscillated) around a rotation axis part. Note that "rotated back and forth" means "periodically alternate between clockwise rotation and anticlockwise rotation around the rotation axis part". With the electric tool 1, when a battery pack 4 as a power source is replaced with a battery pack having a higher battery performance (e.g., rated output voltage), the tip blade 3 is rotated back and forth at a higher speed, thereby enabling an improvement in the sharpness of the tip blade 3. In addition, the electric tool 1 is able to be placed in a standing position regardless of whether or not the battery pack 4 is attached thereto. This sort of electric tool 1 will hereinafter be explained in detail.

The electric tool 1 includes an electric tool body 2, the tip blade 3 and the battery pack 4.

The electric tool body 2 is configured to receive electric power supplied from the battery pack 4 to drive the tip blade 3 so that it is rotated back and forth. The electric tool body 2 includes a part shaped like a bar or rod having a thickness that allows a user to hold the part. The part of the electric tool body 2 functions as a handle that allows the user to hold. The electric tool body 2 includes a housing 21 that houses components configured to drive the tip blade 3 so that it is rotated back and forth. Here, the components include an oscillating rotation mechanism 6, an electric motor 7 and a control circuit 8.

The oscillating rotation mechanism 6 is configured to rotate the tip blade 3 back and forth around the rotation axis part. The electric motor 7 is a drive source configured to drive the oscillating rotation mechanism 6. The control circuit 8 is configured to receive electric power supplied from the battery pack 4 attached to the electric tool body 2 to perform drive control of the electric motor 7 based on respective pieces of information from a power switch 30 and a variable speed dial 31 to be described later. The oscillating rotation mechanism 6 is housed inside an upper part of the housing 21. The electric motor 7 is housed in the housing 21 with the electric motor 7 being on a lower side of the oscillating rotation mechanism 6. The control circuit 8 is housed in the housing 21 with the control circuit 8 being on a lower side of the electric motor 7.

The housing 21 is shaped like a column having a substantially rectangular cross section perpendicular to an axis direction of the housing 21 (an up-down direction). Length of the housing 21 in the axis direction is set to an appropriate length. The housing 21 includes a body portion 22 and a base part 23.

The body portion 22 is shaped like a column with a rectangular cross section, and elongated in the up-down direction. A substantially lower half part of the body portion 22 is the handle 24 that allows a user to hold. The handle 24 has a thickness slightly narrower than a thickness of an upper part 25 that is a substantially upper half portion of the body portion 22.

The base part 23 is provided at a lower end part of the body portion 22 in a lengthwise direction thereof (the up-down direction). The base part 23 protrudes outside a periphery of the body portion 22. Specifically, the base part 23 is shaped like a rectangular cuboid elongated in a fore-aft direction. Both front and back side faces of the base part 23 protrude outward more than both front and back side faces of the upper part 25 of the body portion 22 in the fore-aft direction (see FIG. 1). Both left and right side faces of the base part 23 protrude outward more than both left and right side faces of the handle 24 of the body portion 22 in a left-right direction. Both the left and right side faces of the base part 23 protrude like both left and right side faces of the upper part 25 of the body portion 22, or are slightly narrower than both the left and right side faces of the upper part 25 (see FIG. 2).

The battery pack 4 is allowed to be detachably attached to a side of a bottom face (first surface) 231 of the base part 23. Attaching the battery pack 4 to the side of the bottom face 231 of the base part 23 enables the battery pack 4 to mechanically and electrically connect the base part 23 (i.e., the electric tool body 2).

The tip blade 3 is attached to a side of a front face of the upper part 25 of the housing 21 in a replaceable manner. Specifically, a rotation axis part 61 for rotating the tip blade 3 back and forth is housed inside the upper part 25 of the housing 21 along the fore-aft direction. A tip part (i.e., a front end part) of the rotation axis part 61 protrudes forward from the front face of the upper part 25 of the housing 21. The tip blade 3 is attached to a side of a front end face of the rotation axis part 61 with a bolt 62 in a replaceable manner. The tip blade 3 is perpendicular to the rotation axis part 61.

The tip blade 3 is made of, for example metal. The tip blade 3 is in the shape of a thin flat rectangular plate. A side of a base end part of the tip blade 3 (i.e., one end part of the tip blade 3 in a lengthwise direction thereof) is bent toward a side of the housing 21 in a thickness direction of the tip blade 3 so as to be formed with a step. The base end part of the tip blade 3 is allowed to be attached to the side of the front end face of the rotation axis part 61. In the present embodiment, the base end part of the tip blade 3 has attachment structure compliant with an OIS form. Specifically, the base end part of the tip blade 3 is in the shape of a flat plate. A star-shaped center hole and small holes arranged around it are provided in the flat plate shaped base end part of the tip blade 3. On the other hand, the front end face of the rotation axis part 61 also has attachment structure compliant with the OIS form. That is, a center hole that allows the bolt 62 to be screwed into, and protrusions that are arranged around it and allowed to be fitted in the small holes are provided in the front end face of the rotation axis part 61.

Note that the shape of the tip blade 3 is not limited to the thin flat rectangular plate. For example, various shapes of tip blades having such attachment structure compliant with the OIS form may be applied as the tip blade 3. However, the attachment structure between the tip blade 3 and the rotation axis part 61 is not limited to the OIS form.

The power switch 30 and the variable speed dial 31 are provided on a peripheral face of the housing 21.

The power switch 30 is configured to turn the power supply of the electric tool 1 on and off. The power switch 30 is, for example a slide switch that is allowed to reciprocate in the up-down direction. The power switch 30 is provided at, for example an upper side of the handle 24 on the peripheral face of the housing 21 (e.g., a location where a thumb of a hand holding the handle 24 reaches). The variable speed dial 31 is a dial switch configured to adjust a speed at which the tip blade 3 is rotated back and forth. The speed at which it is rotated back and forth is adjusted according to a rotational position of the variable speed dial 31. The variable speed dial 31 is provided at, for example a lower part of the handle 24 on the peripheral face of the housing 21.

The battery pack 4 is a component for power supply to the electric tool body 2. The battery pack 4 includes battery cells (not shown) and a battery case 41.

Each of the battery cells is, for example a lithium battery cell. The battery cells are connected in series and/or parallel to form a circuit. The battery case 41 is an enclosure that forms an outline of the battery pack 4 and houses the battery cells. The battery pack 4 has battery performance (a rated output voltage, battery capacity and the like) according to the number of the battery cells and the connection form between the battery cells (i.e., series connection and/or parallel connection). In the present embodiment, as the battery pack 4 there are a battery pack whose rated output voltage is 14.4 volts (V) and a battery pack whose rated output voltage is 18 volts (V).

The electric tool 1 configured in this way is activated and deactivated according to On and Off states of the power switch 30. In a state where the electric tool 1 is in operation, turning the variable speed dial 31 enables an adjustment of a speed at which the tip blade 3 is rotated back and forth. A user holds the handle 24 of the electric tool 1 to insert a tip part of the tip blade 3 being rotated back and forth between, for example, a tile and ground, thereby enabling easy removal of tiles. Replacing the tip blade 3 with another tip blade according to work content enables rendering the electric tool 1 available for various work.

In this type of electric tool 1, when the sharpness of the tip blade 3 decreases while the battery pack 4 whose rated output voltage is 14.4 V is attached or mounted, replacing the battery pack 4 with another battery pack whose rated output voltage is 18 V enables an improvement of a speed at which the tip blade 3 is rotated back and forth. That is, it is possible to improve the sharpness of the tip blade 3 without replacing the tip blade 3. Thus, when the sharpness of the tip blade 3 decreases, a user replaces the battery pack 4 with another battery pack having a higher rated output voltage (i.e., battery performance), and is thereby able to continue the work with the electric tool 1 even if the user has no tip blade 3 for replacement.

Some points of the electric tool 1 (shape of the battery pack 4, shape of a side of the bottom face 231 of the base part 23 in the housing 21, attachment structure between the electric tool body 2 and the battery pack 4, the oscillating rotation mechanism 6, and the control circuit 8) will hereinafter be explained in detail.

The shape of the battery pack 4 will be explained with reference to FIGS. 1 and 2.

The battery case 41 of the battery pack 4 is shaped like, for example a rectangular cuboid that is elongated in the fore-aft direction. A side of an upper face 411 of the battery case 41 is attached to a side of the bottom face 231 of the base part 23 in the electric tool body 2. A contour 411a of the upper face 411 of the battery pack 4 has the same shape and the same dimensions as a contour 231a of the bottom face 231 of the base part 23 in the housing 21. In other words, the base part 23 protrudes outward more than the body portion 22, and the battery pack 4 also protrudes outward more than the body portion 22 according to the protruding base part 23. In appearance, when the battery pack 4 is attached to the side of the bottom face 231 of the base part 23 in the electric tool body 2, the battery pack 4 is smoothly joined to the base part 23 with no step. It is consequently possible to improve design in attachment between the electric tool 1 and the battery pack.

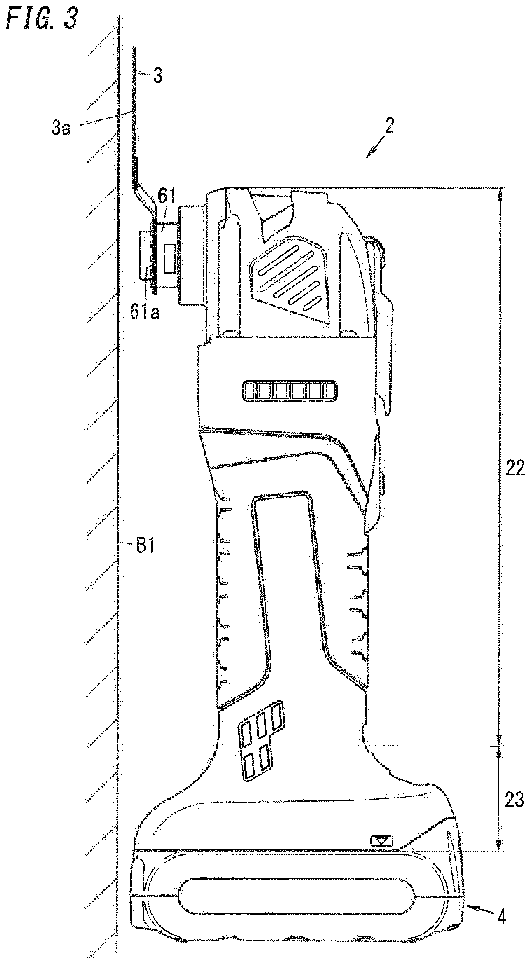

Respective front side faces of the base part 23 of the electric tool body 2 and the battery pack 4 protrude forward up to a location corresponding to an front end face 61a of the rotation axis part 61 or a front face 3a of the tip blade 3 (see FIG. 3). That is, in the forward direction, the respective front side faces of the base part 23 and the battery pack 4 do not protrude too much more than the front end face 61a of the rotation axis part 61 or the front face 3a of the tip blade 3. As shown in FIG. 3, even if the tip blade 3 of the electric tool 1 is made to approach, for example a floor B1 in parallel, it is possible to prevent the respective front side faces of the base part 23 and the battery pack 4 from coming into contact with the floor B1. This enables efficient removal of, for example tiles.

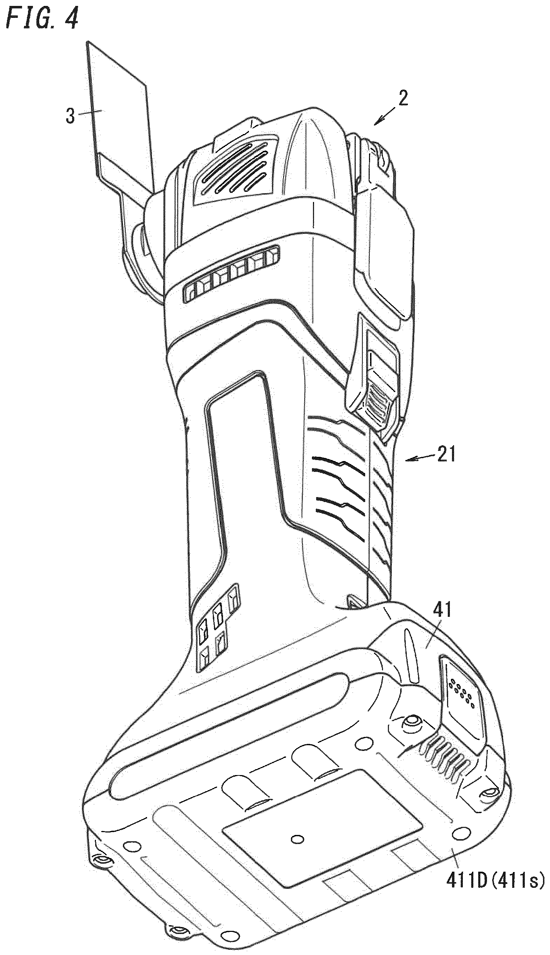

As shown in FIG. 4, the battery case 41 is formed with a flat bottom face 411D (third surface). The bottom face 411D (third surface) possesses a supporting part 411s (second supporting part). Note that the bottom face 411D is a surface on an opposite side of the battery case 41 from a part to be attached to the electric tool body 2 (battery side attached part) in the up-down direction (third direction). The supporting part 411s includes three or more contact points that are allowed to be in contact with the ground.
Since at least three contact points of the supporting part 411s come into contact with the ground, the supporting part 411s is able to be in stable contact with the ground. In the present embodiment, the whole of the bottom face 411D of the battery case 41 includes the supporting part 411s.

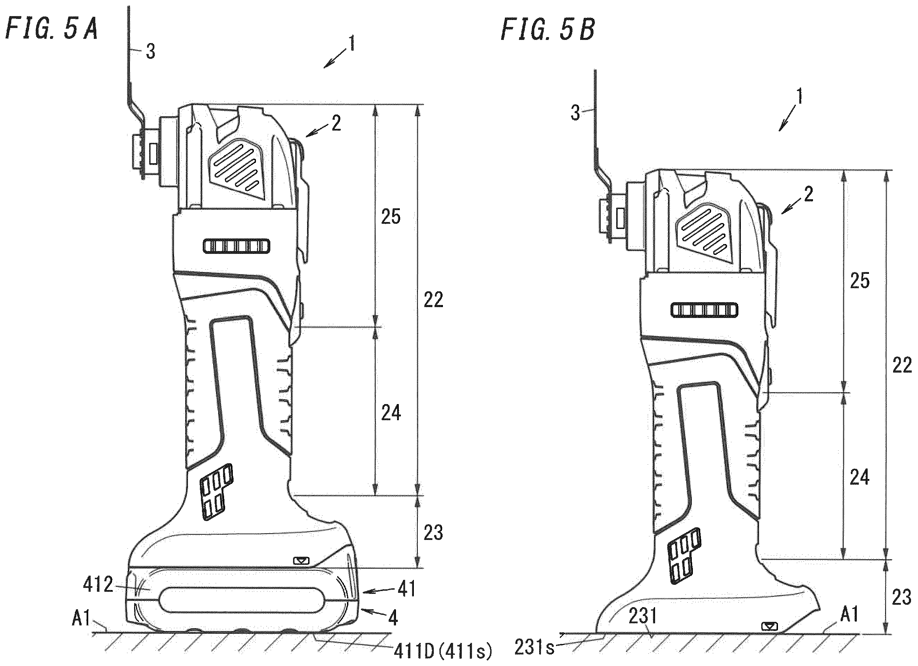

Thus, the bottom face 411D of the battery case 41 includes the supporting part 411s. Therefore, in a state where the battery pack 4 is attached to the electric tool 1, it is possible to place the electric tool 1 in a standing position so that the bottom face 411D of the battery case 41 (i.e., the bottom face of the battery pack 4) is brought into contact with the ground A1 and a side of the upper part 25 of the electric tool 1 is directed up (see FIG. 5A). Thus, it is possible to place the electric tool 1 in a space-saving manner. In addition, the tip blade 3 is prevented from coming into contact with the ground A1 in such an arrangement state of the electric tool 1. It is therefore possible to prevent the tip blade 3 from being damaged by the ground A1.

In the present embodiment, the whole of the bottom face 411D of the battery case 41 includes the supporting part 411s, but the embodiment is not limited to the whole of the bottom face 411D. The supporting part 411s may include three or more protrusions protruding from the bottom face 411D. In this case, since three or more protrusions are provided, three or more points to be in contact with the ground are secured.

Returning to FIGS. 1 and 2, the battery pack 4 protrudes outward more than the body portion 22 of the housing 21. A peripheral side of the battery pack 4 enables an improvement of stability of support in a state where the electric tool 1 to which the battery pack 4 is attached is placed in the standing position.

In particular, both the front and back side faces of the battery pack 4 protrude outward more than both the front and back side faces of the body portion 22 in the fore-aft direction. This enables an improvement of stability in the fore-aft direction in a state where the electric tool 1 to which the battery pack 4 is attached is placed in the standing position.

In addition, the battery case 41 is formed with respective protrusions 412 that protrude outward from both left and right side faces thereof in the left-right direction. Each of the protrusions 412 is elongated from a front end to a back end on a corresponding side face of the battery case 41. Each of the protrusions 412 is shaped like an ellipse elongated in the fore-aft direction as seen from a corresponding side face of the battery case 41. The protrusions 412 enable an improvement of stability of support in the left-right direction in a state where the electric tool 1 to which the battery pack 4 is attached is placed in the standing position.

The battery cells inside the battery case 41 are disposed in an inside bottom of the battery case 41. Specifically, the battery cells are arranged, for example, side by side in the fore-aft direction with the battery cells elongated in the left-right direction. Thus, the battery cells are disposed in the bottom of the battery case 41, thereby lowering the center of gravity of the battery pack 4. This enables an improvement of stability in a state where the electric tool 1 to which the battery pack 4 is attached is placed in the standing position.

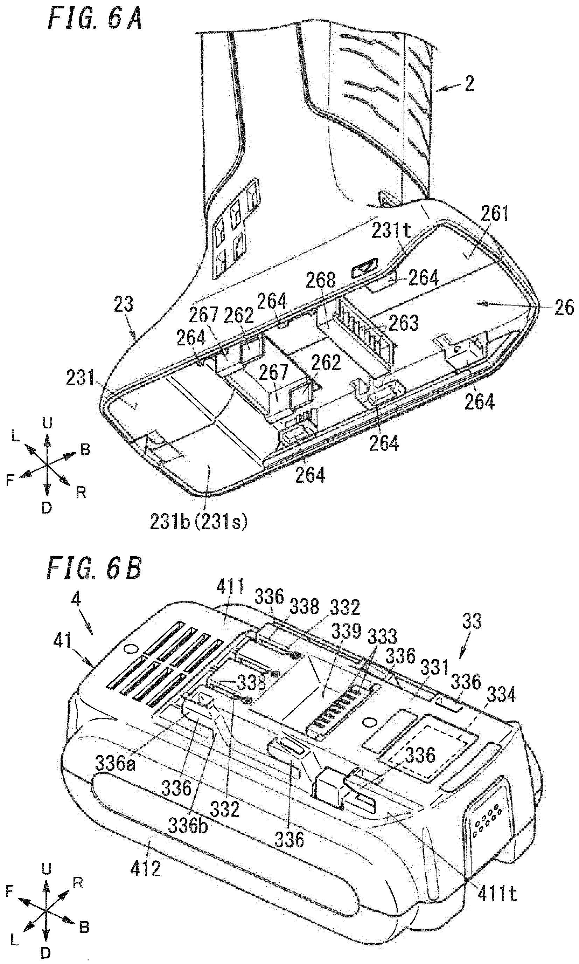

Structure for the attachment of the battery pack 4 to the electric tool body 2 will hereinafter be explained with reference to FIGS. 6A and 6B.

Attachment structure in the electric tool body 2 will first be explained with reference to FIG. 6A. As shown in FIG. 6A, the electric tool body 2 includes a back part 231t that is provided on a side of the bottom face 231 of the base part 23 and inclined upward. The base part 23 is provided with a battery mounting part 26 in the bottom face 231 (first surface). The bottom face 231 is a surface on an opposite side of the housing 21 from a part to which the tip blade 3 is attached, in the up-down direction (first direction). The battery mounting part 26 allows the battery pack 4 to be attached to. The battery mounting part 26 includes an engagement recess 261 provided in the bottom face 231 of the base part 23, two or more (in the illustrated example, two) power input terminals 262, and two or more (in the illustrated example, eight) body side communication terminals 263.

The engagement recess 261 is shape like, for example a rectangular cuboid. The engagement recess 261 is elongated along a lengthwise direction of the bottom face 231 of the base part 23 (fore-aft direction). A back end part of the engagement recess 261 opens outward from a back side face of the base part 23. Hereinafter, the back end part of the engagement recess 261 will also be described as an open back end part.

The engagement recess 261 is formed with body side projections 264 on left and right inner side faces thereof. The body side projections 264 are allowed to be hung on battery side projections 336 to be described later of the battery pack 4. Each of the body side projections 264 is shaped like, for example a rectangular cuboid. The body side projections 264 protrude at right angles from the left and right inner side faces of the engagement recess 261. Each of the left and right inner side faces of the engagement recess 261 is provided with two or more (e.g., three) body side projections 264 at intervals along the lengthwise direction of the engagement recess 261 (fore-and-aft direction).

The power input terminals 262 and the body side communication terminals 263 are disposed on a bottom of the engagement recess 261. The power input terminals 262 are allowed to be electrically connected with power output terminals 332 to be described later of the battery pack 4 (see FIG. 6B). The body side communication terminals 263 are allowed to be electrically connected with battery side communication terminals 333 to be described later of the battery pack 4 (see FIG. 6B).

For example, two power input terminals 262 (positive and negative input terminals) are provided. The two power input terminals 262 are disposed on a front part of the bottom of the engagement recess 261 with a space therebetween in the left-right direction of the engagement recess 261. The two power input terminals 262 are held by a retainer 267 provided on the bottom of the engagement recess 261 with respective tip parts of the power input terminals 262 directed towards the open back end part of the engagement recess 261.

One or more (e.g., eight) body side communication terminals 263 are provided. The body side communication terminals 263 are arranged at a center part of the bottom of the engagement recess 261 in the fore-aft direction. The body side communication terminals 263 are arranged at intervals in the left-right direction of the engagement recess 261. The body side communication terminals 263 are held by a retainer 268 provided on the bottom of the engagement recess 261. Respective tip parts of the body side communication terminals 263 are directed towards the open back end part of the engagement recess 261.

Attachment structure in the battery pack 4 will next be explained with reference to FIG. 6B. As shown in FIG. 6B, a side of the upper face 411 of a back part 411t in the battery pack 4 is inclined upward according to a side of the bottom face 231 of the back part 231t of the base part 23 in the electric tool body 2. A battery side attached part 33 is provided on a side of the upper face 411 of the battery pack 4. The battery side attached part 33 is allowed to be attached to the battery mounting part 26 of the electric tool body 2. The battery side attached part 33 includes an engagement base 331 provided on the upper face 411 of the battery pack 4, the power output terminals 332, the battery side communication terminals 333 and an information retainer 334.

The information retainer 334 is configured to retain information on battery performance of the battery pack 4 (e.g., a rated output voltage). For example, the information retainer 334 is a nonvolatile storage (memory) storing the information on the battery performance. The information retainer 334 is housed in the battery case 41.

The engagement base 331 is allowed to be fit in the engagement recess 261 of the electric tool body 2 (see FIG. 6A). The engagement base 331 is formed into a shape (e.g., a rectangular cuboid) so as to engage with the engagement recess 261. The engagement base 331 is elongated along a lengthwise direction of the upper face 411 of the battery pack 4 (the fore-aft direction). A back end part of the engagement base 331 reaches a back end part of the battery pack 4. The back end part of the engagement base 331 forms a back side face of the battery pack 4 (i.e., a back side face of the battery case 41).

The engagement base 331 is formed with the battery side projections 336 on both left and right side faces of the engagement base 331. The battery side projections 336 are configured to be individually hung on the body side projections 264 of the electric tool body 2. The battery side projections 336 protrude at right angles from both the left and right side faces of the engagement base 331. Each of the battery side projections 336 is shaped like an inverted-L as seen from a corresponding side in the left-right direction. That is, each of the battery side projections 336 possesses a transverse piece 336a elongated in the fore-aft direction of the battery pack 4, and a longitudinal piece 336b elongated below from a back end part of the transverse piece 336a.

A space surrounded by the transverse piece 336a and the longitudinal piece 336b of each battery side projection 336 and the upper face 411 of the battery pack 4 opens towards a front side of the battery pack 4. A lower face of the transverse piece 336a of each battery side projection 336 (i.e., a face that faces the upper face 411 of the battery pack 4) is to be hung on an upper face of a corresponding body side projection 246. Each of both the left and right side faces of the engagement base 331 is provided with two or more (e.g., three-namely the same as the number of the body side projections 264) battery side projections 336 with intervals along a fore-aft direction of the engagement base 331. Thus, the battery side projections 336 correspond to the body side projections 246, respectively.

The power output terminals 332 and the battery side communication terminals 333 are embedded in the engagement base 331. The power output terminals 332 are configured to output electric power stored in the battery pack 4 to an outside, and allowed to be electrically connected to the power input terminals 262 of the electric tool body 2. The battery side communication terminals 333 are configured to output information retained by the information retainer 334 to an outside, and allowed to be electrically connected to the body side communication terminals 263 of the electric tool body 2.

For example, two power output terminals 332 (positive and negative output terminals) are provided. The two power output terminals 332 correspond to the two power input terminals 262, respectively. The engagement base 331 is formed with two cut grooves 338 in a front face thereof. Each of the cut grooves 338 possesses width that is narrow in the left-right direction. Each of the cut grooves 338 is cut into a concave shape from the front face to a back face side of the engagement base 331. Each of the cut grooves 338 opens on a side of an upper face of the engagement base 331. The cut grooves 338 are arranged with a space therebetween in a left-right direction of the engagement base 331. The two power output terminals 332 are disposed at respective inner back end parts of the two cut grooves 338 in the fore-apt direction (i.e., hindmost locations).

One or more (e.g., eight-namely the same as the number of the body side communication terminals 263) battery side communication terminals 333 are provided. The one or more battery side communication terminals 333 correspond one-to-one to the one or more body side communication terminals 263. The engagement base 331 is provided with, for example a rectangular storage cavity 339 in a center of the upper face of the engagement base 331 in the fore-aft direction. The battery side communication terminals 333 are disposed at a back part of the storage cavity 339. The battery side communication terminals 333 are held by a retainer provided at a bottom of the storage cavity 339. Respective tip parts of the battery side communication terminals 333 are directed towards the front side of the battery pack 4.

A procedure (method) for attachment of the battery pack 4 to the electric tool body 2 is now explained with reference to FIGS. 6A and 6B. First, the engagement base 331 of the battery pack 4 is moved upward from below to be fit in the engagement recess 261 of the electric tool body 2 with the battery pack 4 slightly shifted backward. In this state, the upper face 411 of the battery pack 4 is in contact with the bottom face 231 of the base part 23 in the electric tool body 2. The body side projections 264 of the electric tool body 2 are then disposed in front of respective battery side projections 336 of the battery pack 4. The power input terminals 262 of the electric tool body 2 are also disposed in front of respective cut grooves 338 of the battery pack 4. In addition, the body side communication terminals 263 of the electric tool body 2 are disposed in front of respective battery side communication terminals 333 of the battery pack 4.

In the state where the upper face 411 of the battery pack 4 is in contact with the bottom face 231 of the base part 23 in the electric tool body 2, the battery pack 4 is then moved forward relative to the base part 23 of the electric tool body 2. A side of the upper face 411 of the back part 411t in the battery pack 4 comes into contact with a side of the bottom face 231 of the back part 231t of the base part 23 in the electric tool body 2. That is the contour 411a of the upper face 411 of the battery pack 4 matches a contour 231a of the bottom face 231 of the electric tool body 2. Thus, the lower faces of the battery side projections 336 of the battery pack 4 are hung on the body side projections 264 of the electric tool body 2, so that the battery pack 4 is mechanically connected to the electric tool body 2.

In this connection state, the power input terminals 262 of the electric tool body 2 are plugged in respective cut grooves 338 of the battery pack 4. Thus, the power input terminals 262 are electrically connected to respective power output terminals 332. It is consequently possible to supply electric power stored in the battery pack 4 to the electric tool body 2 through the power output terminals 332 and the power input terminals 262. In addition, the body side communication terminals 263 of the electric tool body 2 are electrically connected to respective battery side communication terminals 333 of the battery pack 4. It is consequently possible to output the information to the electric tool body 2 through the battery side communication terminals 333 and the body side communication terminals 263. Here, the information-namely information on the battery performance is retained by the information retainer 334 of the battery pack 4.

Thus, the battery pack 4 is mechanically and electrically connected to the electric tool body 2, while at the same time the battery pack 4 is attached to the electric tool body 2. Note that a reverse procedure of the abovementioned procedure for attachment enables detachment of the battery pack 4 from the electric tool body 2.

In the present embodiment, the battery pack whose rated output voltage is 14.4 V and the battery pack whose rated output voltage is 18 V are provided as the battery pack 4. In each battery pack, the shape of a side of the upper face 411 and the structure of the battery side attached part 33 as the battery pack 4 are the same. That is, the battery pack whose rated output voltage is 18 V is configured in the same way as the battery pack whose rated output voltage is 14.4 V, except that the former has the same or longer length in the up-down direction as or than the latter according to the difference in the number of battery cells. The electric tool 1 therefore enables any of the battery packs to be attached to the electric tool body 2 as the battery pack 4.

In the present embodiment, the side of the bottom face 231 of the back part 231t of the base part 23 in the electric tool body 2 and the side of the upper face 411 of the back part 411t in the battery pack 4 are inclined upward, but needn't be inclined.

A shape of the side of the bottom face 231 of the base part 23 in the electric tool body 2 will next be explained with reference to FIG. 6A. The bottom face 231 (second surface) is a surface on an opposite side of the base part 23 from the body portion 22 in the up-down direction (second direction). The base part 23 possesses, on the side of the bottom face 231, a part 231b except the engagement recess 261 and the back part 231t. The part 231b on the side of the bottom face 231 is flat and possesses a supporting part 231s (first supporting part). When being placed on the ground, the supporting part 231s is in contact with the ground with three or more points of support. Thus, the supporting part 231s is in contact with the ground with three or more points of support, and is thereby able to stably come into contact with the ground. In the present embodiment, the whole of the bottom 231 of the base part 23 includes the supporting part 231s.

Thus, the base part 23 possesses the supporting part 231s on the side of the bottom face 231. It is accordingly possible to place the electric tool 1 (i.e., the electric tool body 2) in a standing position even with no battery pack in a state where the bottom face 231 of the base part 23 in the electric tool 1 is in contact with the ground A1 and the side of the upper part 25 in the electric tool 1 is directed up (see FIG. 5B).

As stated above, the base part 23 protrudes outside the periphery of the body portion 22. The support by the base part 23 therefore enables an improvement of stability in a state where the electric tool 1 with no battery pack is placed in the standing position. Both the front and back side faces of the base part 23 protrude outward in the fore-aft direction more than both the front and back side faces of the upper part 25 in the electric tool 1.

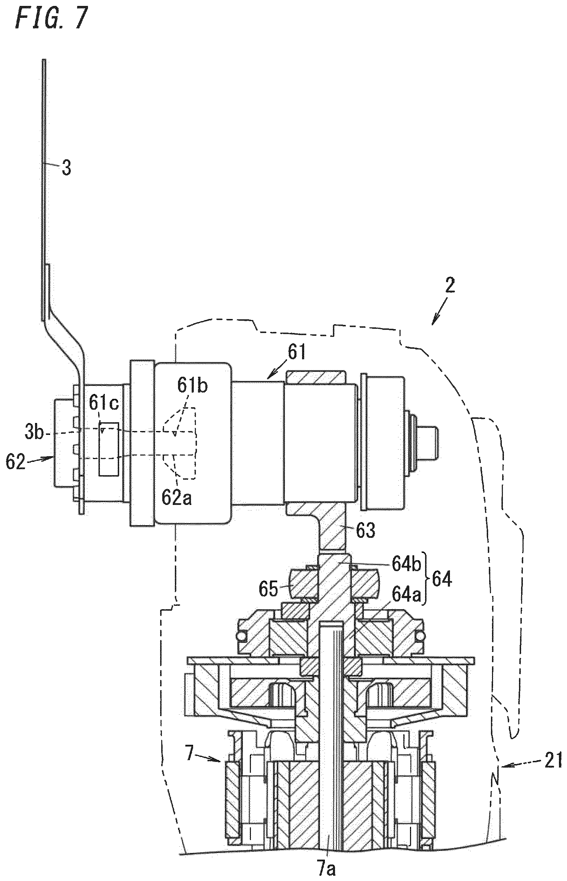

The oscillating rotation mechanism 6 will hereinafter be explained with reference to FIG. 7.

The oscillating rotation mechanism 6 is disposed inside the upper part of the housing 21. The electric motor 7 is disposed at a lower side of the oscillating rotation mechanism 6 (i.e., at an upper side of the handle 24.). The electric motor 7 is disposed along a lengthwise direction of the housing 21. A motor shaft 7a of the electric motor 7 extends toward the upper part of the housing 21. The motor shaft 7a is an output shaft for outputting rotary power by the electric motor 7.

The oscillating rotation mechanism 6 includes the rotation axis part 61, the bolt 62, an operating arm 63 and a connecting shank 64. A part of the rotation axis part 61, the operating arm 63 and the connecting shank 64 are housed in the housing 21.

The rotation axis part 61 is configured to support the tip blade 3 and also rotate it back and forth. The rotation axis part 61 is disposed inside the upper part of the housing 21 along the fore-aft direction (i.e., a direction perpendicular to the motor shaft 7a), and configured to rotate around a center axis of the rotation axis part 61. The tip part of the rotation axis part 61 protrudes forward from a front face of the housing 21.

The front end face of rotation axis part 61 is provided with an insertion hole 61c and nibs. The insertion hole 61c allows the bolt 62 to be inserted into. An internal thread 61b is provided in the insertion hole 61c. The internal thread 61b allows a threaded body of the bolt 62 with an external thread 62a to be screwed into. The nibs are arranged around the insertion hole 61c on the front end face 61a of the rotation axis part 61. The base end part of the tip blade 3 is provided with a center hole 3b and stomas or small holes (not shown) around the center hole 3b. The stomas allow the nibs on the front end face 61a of the rotation axis part 61 to be fit in. The threaded body of the bolt 62 with the external thread 62a is to be inserted and screwed into the insertion hole 61c, having the internal thread 61b, of the rotation axis part 61 through the center hole 3b of the tip blade 3. The base end part of the tip blade 3 is accordingly sandwiched between the front end face 61a of the rotation axis part 61 and a head of the bolt 62. As a result, the tip blade 3 is attached to the rotation axis part 61 in an integrally rotatable manner with the tip blade 3 being at right angles to the rotation axis part 61. Note that removing the bolt 62 from the insertion hole 61c having the internal thread 61b enables the tip blade 3 to be detached from the rotation axis part 61.

The operating arm 63 extends backward from a peripheral face of the rotation axis part 61 (i.e., in a direction perpendicular to the rotation axis part 61). A back end part of the operating arm 63 is formed with a U-shaped part (not shown) branched into a U-shape on both left and right sides thereof.

The connecting shank 64 is connected to a tip part of the motor shaft 7a in an integrally rotatable manner. The connecting shank 64 possesses a concentric axis 64a as a second half of the connecting shank 64, and an eccentric shaft 64b as a first half of the connecting shank 64. The concentric axis 64a is connected to the motor shaft 7a in a concentric manner. The eccentric shaft 64b is provided at an end of the concentric axis 64a with a center of the eccentric shaft 64b being offset from a center axis of the concentric axis 64a. The eccentric shaft 64b is inserted into the U-shaped part of the operating arm 63. A bearing 65 is attached around a periphery of the eccentric shaft 64b. A periphery of the bearing 65 is in contact with an inside of both the left and right sides of the U-shaped part of the operating arm 63. That is, the bearing 65 is sandwiched with the U-shaped part of the operating arm 63, and the eccentric shaft 64b is fit in a center hole of the bearing 65.

With the oscillating rotation mechanism 6, when the electric motor 7 is driven to rotate the motor shaft 7a, the connecting shank 64 rotates, thereby rotating the eccentric shaft 64b around the center axis of the motor shaft 7a in an eccentric (out-of-center) manner. Of the eccentric movement, back and forth movement corresponding to the left-right direction is transmitted to the operating arm 63 so that the operating arm 63 is rotated back and forth in the left-right direction. The rotation axis part 61 is accordingly rotated back and forth around the center axis. As a result, the tip blade 3 attached to the front end part of the rotation axis part 61 is rotated back and forth around the rotation axis part 61.

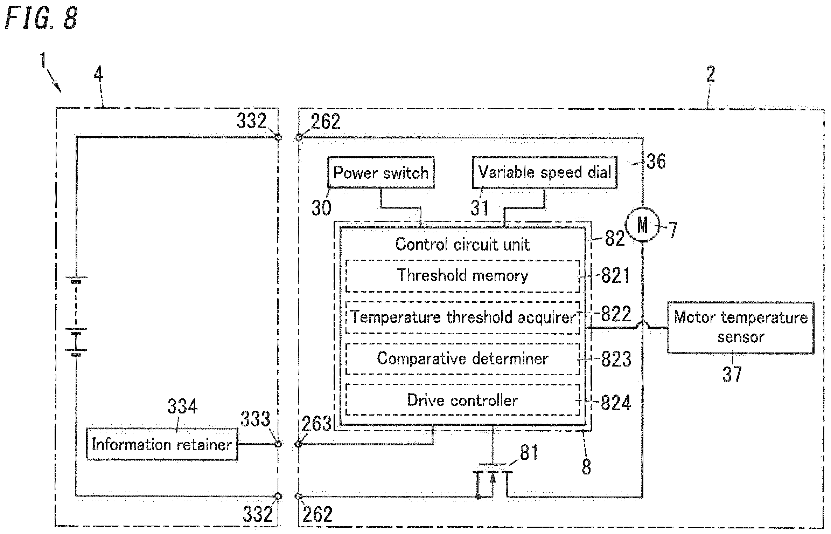

The control circuit 8 will hereinafter be explained with reference to FIG. 8.

The control circuit 8 is configured to control power supply from the battery pack 4 attached to the electric tool body 2 to the electric motor 7 based on various pieces of information from the power switch 30 and the variable speed dial 31. In this case, when an adjustment amount of the variable speed dial 31 is unchanged, the control circuit 8 will control power supply to the electric motor 7 so that an larger electric current flows through the electric motor 7 as the battery pack 4 attached has a higher rated output voltage (battery performance). Therefore, when an adjustment amount of the variable speed dial 31 is unchanged (constant or same), the electric motor 7 is rotated at a higher speed (i.e., the tip blade 3 is rotated back and forth at a higher speed) as the battery pack 4 has a higher rated output voltage.

In addition, the control circuit 8 may have a temperature threshold that is set in advance according to the rated output voltage of the battery pack 4 to be attached, and control the power supply to the electric motor 7 so that temperature generated by the electric motor 7 is maintained at the temperature threshold or less.

The temperature threshold is provided in order to prevent the performance of the electric motor 7 from being degraded due to the temperature generated by the electric motor 7. The temperature threshold may be set to temperature obtained by subtracting constant temperature from allowable temperature for the temperature to be generated by the electric motor 7. The allowable temperature corresponds to temperature generated by the electric motor 7 whose performance is not degraded thereby. A value of the temperature threshold is preferably set to a different value according to the rated output voltage of the battery pack 4.

The electric motor 7 is rotated at a higher speed as the battery pack 4 has a higher rated output voltage. In this control, the electric motor 7 is controlled without using the rated output voltage retained by the information retainer 334 of the battery pack 4. On the other hand, in the control in which the electric motor 7 is maintained at the temperature threshold or less, the electric motor 7 is controlled based on the rated output voltage retained by the information retainer 334. The configuration of the control circuit 8 will hereinafter be explained.

The control circuit 8 includes a switching device 81 and a control circuit unit 82.

Here, the electric tool body 2 includes a power supply line 36 and a motor temperature sensor 37. The power supply line 36 allows electric power to be supplied from the battery pack 4 to the electric motor 7. The power supply line 36 is connected from the positive input terminal 262 to the negative input terminal 262 through the electric motor 7 and the control circuit 8 (switching device 81). The motor temperature sensor 37 is disposed around the electric motor 7, and configured to detect (or measure) temperature generated by the electric motor 7.

The switching device 81 is, for example a semiconductor switch (e.g., MOSFET). The switching device 81 is provided in an intermediate position of the power supply line 36, and configured to turn on and off power supply from the battery pack 4 attached to the electric tool body 2 to the electric motor 7.

The control circuit unit 82 is configured to acquire various pieces of information from the power switch 30, the variable speed dial 31, the information retainer 334 and the motor temperature sensor 37. The control circuit unit 82 is also configured to control turning on and off the switching device 81 (e.g., perform pulse width modulation (PWM) control) based on one or more pieces of information acquired. Thus, power supply to the electric motor 7 is controlled.

The control circuit unit 82 includes a threshold memory 821, a temperature threshold acquirer 822, a comparative determiner (a unit for determination based on comparison) 823, and a drive controller 824.

The threshold memory 821 is configured to store a relational table between temperature thresholds and rated output voltages. The threshold memory 821 is composed of a nonvolatile memory. The threshold memory 821 stores different temperature thresholds and respective related rated output voltages.

The temperature threshold acquirer 822 is configured to, when the battery pack 4 is attached to the electric tool body 2, acquire information on a rated output voltage from the information retainer 334 of the battery pack 4 through the battery side communication terminals 333 and the body side communication terminals 263. The temperature threshold acquirer 822 is also configured to acquire, from the threshold memory 821, a temperature threshold related to the rated output voltage in the information acquired.

The comparative determiner 823 is configured to compare between a temperature detection value showing the temperature detected (or measured) through the motor temperature sensor 37, and the temperature threshold acquired through the temperature threshold acquirer 822. The comparative determiner 823 is also configured to, when determining that the temperature detection value exceeds the temperature threshold, provide the drive controller 824 with a power supply restricting signal that is a signal for restricting power supply to the electric motor 7.

The drive controller 824 is configured to, when the power switch is turned on, control a duty ratio of the switching device 81 (i.e., a ratio of ON time to one period, showing the relationship between the ON time and OFF time during the one period of the switching device 81) according to an adjustment amount of the variable speed dial. Therefore, when the adjustment amount of the variable speed dial 31 is unchanged, as the battery pack 4 attached has a higher rated output voltage, a larger electric current is supplied to the electric motor 7, thereby rotating the electric motor 7 at a higher speed. When the power switch 30 is turned off, the drive controller 824 turns the switching device 81 off to stop the electric motor 7.

When receiving the power supply restricting signal from the comparative determiner 823, the drive controller 824 controls the switching device 81 to restrict power supply to the electric motor 7 regardless of the adjustment amount of the variable speed dial 31. For example, the drive controller 824 controls the switching device 81 so that the power supply to the electric motor 7 is stopped or so that a value of the electric current to be supplied to the electric motor 7 is restricted or decreased to a predetermined value.

The control circuit 8 is configured in this way. As stated, when the adjustment amount of the variable speed dial 31 is unchanged, as the battery pack 4 attached to the electric tool body 2 has a higher rated output voltage, the electric motor 7 is controlled so that it is rotated at a higher speed. Therefore, the tip blade 3 is rotated back and forth at a higher speed. In this case, the electric motor 7 is controlled so that the performance thereof is not degraded.

### (2) Modified Examples

### (2-1) Modified Example 1

In the abovementioned embodiment, either of the two battery packs 4 each of which has different battery performance (e.g., rated output voltage) is detachably attached to the electric tool body 2. In this modified example, three or more battery packs 4 each of which has different battery performance may be detachably attached to the electric tool body 2.

### (2-2) Modified Example 2

In the abovementioned embodiment, the battery performance of each battery pack 4 is a rated output voltage. As the battery pack 4 has a higher rated output voltage, the electric motor 7 is controlled so that it is rotated at a higher speed. In the present disclosure, the battery performance is not limited to such a rated output voltage. In this modified example, the battery performance may be, for example a rated capacity. When the battery performance is a rated capacity, it is determined that the battery performance is higher as the rated capacity is larger. Specifically, in this case, an information retainer 334 of a battery pack 4 is configured to retain information on a rated capacity thereof. A control circuit 8 is configured to acquire the information on the rated capacity retained by the information retainer 334 to determine the size of the rated capacity. In this case, an electric tool body 2 is provided with a booster circuit at a front stage of an electric motor 7. The booster circuit is configured to step up an output voltage of the battery pack 4. The control circuit 8 is also configured to, as the battery pack 4 attached has a larger rated capacity, step up the output voltage of the battery pack 4 to a higher voltage through the booster circuit, thereby rotating the electric motor 7 at a higher speed.

### (2-3) Modified Example 3

In the abovementioned embodiment, the electric motor 7 may be a brushless motor.

Here, the brushless motor includes a stator, a rotor, a rotational position detector configured to detect a rotational position of the rotor, and windings wound around the stator. Switching devices (hereinafter called "motor winding switching devices") are connected to the windings in order to change respective directions of electric currents flowing through the windings. In the brushless motor, the motor winding switching devices are turned on and off based on a result of detection by the rotational position detector. With this type of brushless motor, the rotation of the brushless motor is controlled by alternatively changing the respective directions of the electric currents flowing through the windings.

In this embodiment, as the battery pack 4 attached has a higher performance, the switching device 81 is controlled so that a larger electric current is supplied to the electric motor 7, thereby rotating the electric motor 7 at a higher speed. As another control for the rotational speed of the electric motor 7, when a brushless motor is provided as an electric motor 7, control below may be provided. That is, as a battery pack 4 attached has a higher battery performance, a control circuit 8 may control motor winding switching devices so that respective directions of electric currents flowing through windings are changed at faster timing, thereby rotating the brushless motor at a higher rotational speed.

### (2-4) Modified Example 4

The present disclosure includes not only the abovementioned embodiment and modified examples but also combinations of the embodiment and modified examples.

### (3) Advantages

As is apparent from the abovementioned embodiments and modified examples, an electric tool 1 according to a first aspect includes a tip blade 3, an oscillating rotation mechanism 6, a motor 7, a battery mounting part 26 and a control circuit 8. The oscillating rotation mechanism 6 is configured to rotate the tip blade 3 back and forth around a rotation axis part 61. The motor 7 is configured to drive the oscillating rotation mechanism 6. The battery mounting part 26 allows any one of battery packs 4 to be detachably attached to. Each of the battery packs 4 is configured to supply electric power to the motor 7, and has different battery performance. The control circuit 8 is configured to receive electric power supplied from the battery pack 4 attached to the battery mounting part 26 to control the motor 7. The control circuit 8 is also configured to, as the battery pack 4 attached to the battery mounting part 26 has a higher battery performance, rotate the motor 7 at a higher speed, thereby rotating the tip blade 3 back and forth at a higher speed.

With this configuration, when the sharpness of the tip blade 3 decreases, the battery pack 4 attached to the battery mounting part 26 can be placed with a battery pack 4 having a higher battery performance. As the battery pack 4 attached to the battery mounting part 26 has a higher battery performance, the control circuit 8 rotates the motor 7 at a higher speed to rotate the tip blade 3 back and forth at a higher speed. Here, although the sharpness of the tip blade 3 is better as the tip blade 3 is new, the tip blade 3 is rotated back and forth at a higher speed, thereby increasing the sharpness of the tip blade 3. Therefore, as stated above, the battery pack 4 is replaced with a battery pack 4 having a higher battery performance so that the tip blade 3 is rotated back and forth at a higher speed, thereby enabling an improvement in the sharpness of the tip blade 3 without replacing the tip blade 3.

In an electric tool 1 according to a second aspect turning on the first aspect, the battery performance of each of the battery packs 4 is a rated output voltage of a corresponding battery pack 4.

In this configuration, as the battery packs 4 having their respective different battery performance, battery packs 4 having their respective different rated output voltages are provided. As the battery packs 4 having their respective different battery performance, battery packs having their respective different rated output voltages are commercially available and can be used.

An electric tool 1 according to a third aspect turning on the first aspect or the second aspect further includes a housing 21 forming an enclosure of the electric tool 1. The housing 21 is provided with the tip blade 3, the oscillating rotation mechanism 6, the battery mounting part 26 and the control circuit 8. The battery mounting part 26 is provided in a first surface 231 on an opposite side of the housing 21 from a part of the housing 21, to which the tip blade 3 is attached, in a first direction (the up-down direction).

In this configuration, the battery mounting part 26 is provided in the first surface 231 on an opposite side of the housing 21 from the tip blade 3. It is accordingly possible to replace the battery pack 4 without disturbance of the tip blade 3.

In an electric tool 1 according to a fourth aspect turning on the third aspect, the housing 4 includes a body portion 22 and a base part 23. The body portion 22 is provided (e.g., integrally) with the base part 23. The base part 23 protrudes outside a periphery of the body portion 2. The battery mounting part 26 is provided in a second surface 231 on an opposite side of the base part 23 from the body portion 22 in a second direction (the up-down direction). The second surface 231 includes a first supporting part 231s that is allowed to be in contact with the ground with three or more points of support.

This configuration enables the electric tool 1 to be stably placed in a standing position with no battery pack in a state where the first supporting part 231s of the base part 23 is in contact with the ground and a side of the body portion 22 of the housing 21 is directed up.

Specifically, the base part 23 provided for the body portion 22 protrudes outside the periphery more than the body portion 22. The support by the base part 23 therefore enables stable placement of the electric tool 1 in the standing position even if the electric tool 1 is inclined from the standing position. The first supporting part 231s of the base part 23 is in contact with the ground with three or more points of support being in contact with the ground. This also enables stable placement of the electric tool 1 in the standing position.

As stated above, the placement of the electric tool 1 in the standing position enables space saving arrangement of the electric tool 1 and prevention of damage of the tip blade 3 by contact with the ground.

An electric tool 1 according to a fifth aspect turning on any one of the first to fourth aspects further includes the battery packs 4 that are allowed to be detachably attached to the battery mounting part 26.

This configuration enables provision of the electric tool including the battery packs 4.

In an electric tool 1 according to a sixth aspect turning on the fifth aspect, each of the battery packs 4 includes a battery side attached part 33 allowed to be attached to the battery mounting part 26. A third surface 411D on an opposite side of each battery pack 4 from the battery side attached part 33 in a third direction (up-down direction) includes a second supporting part 411s allowed to be in contact with the ground with three or more points of support.

In this configuration, the third surface 411D of each battery pack 4 includes the second supporting part 411s. This enables stable placement of the electric tool 1 in the standing position with the second supporting part 411s of the battery pack 4 being in contact with the ground even when the battery pack 4 is attached to the battery mounting part 26 of the electric tool 1.

### Reference Signs List

- 1: Electric tool
- 3: Tip blade
- 4: Battery pack
- 6: Oscillating rotation mechanism
- 7: Electric motor (Motor)
- 8: Control circuit
- 21: Housing
- 22: Body portion
- 23: Base part
- 26: Battery mounting part
- 33: Battery side attached part
- 231: Bottom face (first surface)
- 231s: Supporting part (first supporting part)
- 411: Bottom face (third surface)
- 411s: Supporting part (second supporting part)

## Claims

1. An electric tool (1), comprising:
a tip blade (3);
an oscillating rotation mechanism (6) configured to rotate the tip blade (3) back and forth around a rotation axis part (61);
a motor (7) configured to drive the oscillating rotation mechanism (6);
a battery mounting part (26) that allows any one of battery packs (4) to be detachably attached to, each of the battery packs (4) being configured to supply electric power to the motor (7), and having different battery performance;
a control circuit (8) configured to receive electric power supplied from the battery pack (4) attached to the battery mounting part (26) to control the motor (7); and
a variable speed switch (31) configured to adjust a speed at which the tip blade (3) is rotated back and forth, and
a motor temperature sensor (37) configured to detect temperature generated by the motor (7),
the control circuit (8) including a switching device (81) which is configured to turn on and off power supply from the battery pack (4) attached to the battery mounting part (26) to the motor (7),
the control circuit (8) being also configured to control a duty ratio of the switching device (81) according to an adjustment amount of the variable speed switch (31) without using information on battery performance of the battery pack (4) attached to the battery mounting part (26), so that, when the adjustment amount of the variable speed switch (31) is unchanged, the motor (7) is rotated at a higher speed and the tip blade (3) rotates back and forth at a higher speed as the battery pack (4) attached to the battery mounting part (26) has a higher battery performance,
the control circuit (8) including
a threshold memory (821) storing different temperature thresholds and respective related rated output voltages,
a temperature threshold acquirer (822) configured to acquire information on a rated output voltage from an information retainer (334) of the battery pack (4) attached to the battery mounting part (26) and to acquire, from the threshold memory (821), a temperature threshold related to the rated output voltage in the information acquired,
a drive controller (824) configured to restrict power supply to the electric motor (7) when receiving a power supply restricting signal, and
a comparative determiner (823) configured to, when the temperature detection value detected through the motor temperature sensor (37) exceeds the temperature threshold acquired through the temperature threshold acquirer (822), provide the drive controller (824) with the power supply restricting signal.

2. The electric tool (1) of claim 1, wherein the battery performance of each of the battery packs (4) is a rated output voltage of a corresponding battery pack (4).

3. The electric tool (1) of claim 1 or 2, further comprising a housing (21) forming an enclosure of the electric tool (1), wherein
the housing (21) is provided with the tip blade (3), the oscillating rotation mechanism (6), the battery mounting part (26) and the control circuit (8),
the battery mounting part (26) is provided in a first surface (231) on an opposite side of the housing 21 from a part of the housing 21, to which the tip blade (3) is attached, in a first direction.

4. The electric tool (1) of claim 3, wherein
the housing (4) comprises a body portion (22) and a base part (23), the body portion (22) being provided with the base part (23), the base part (23) protruding outside a periphery of the body portion (22),
the battery mounting part (26) is provided in a second surface (231) on an opposite side of the base part (23) from the body portion (22) in a second direction. the second surface (231) including a first supporting part (231s) that is allowed to be in contact with ground with three or more points of support.

5. The electric tool (1) of any one of claims 1 to 4, further comprising the battery packs (4).

6. The electric tool (1) of claim 5, wherein
each of the battery packs (4) includes a battery side attached part (33) allowed to be attached to the battery mounting part (26),
a third surface (411D) on an opposite side of each battery pack (4) from the battery side attached part (33) in a third direction includes a second supporting part (411s) allowed to be in contact with ground with three or more points of support.

## Patentansprüche

1. Ein Elektrowerkzeug (1), umfassend:
eine Spitzenklinge (3);
einen oszillierenden Rotationsmechanismus (6), der dazu konfiguriert ist, die Spitzenklinge (3) um einen Rotationsachsenteil (61) hin und her zu drehen;
einen Motor (7), der dazu konfiguriert ist, den oszillierenden Rotationsmechanismus (6) anzutreiben;
einen Akku-Aufnahmeteil (26), an dem einer von mehreren Akkupacks (4) abnehmbar befestigt werden kann, wobei jeder der Akkupacks (4) konfiguriert ist, um den Motor (7) mit elektrischer Energie zu versorgen, und unterschiedliche Akkuleistungen aufweist;
eine Steuerschaltung (8), die dazu konfiguriert ist, von dem am Akku-Aufnahmeteil (26) angebrachten Akkupack (4) gelieferte elektrische Energie zu empfangen, um den Motor (7) zu steuern; und
einen Drehzahlverstellschalter (31), der dazu konfiguriert ist, die Geschwindigkeit einzustellen, mit der die Spitzenklinge (3) hin und her gedreht wird, und
einen Motortemperatursensor (37), der dazu konfiguriert ist, die vom Motor (7) erzeugte Temperatur zu erfassen,
wobei die Steuerschaltung (8) eine Schaltvorrichtung (81) beinhaltet, die dazu konfiguriert ist, die Energiezufuhr von dem am Akku-Aufnahmeteil (26) befestigten Akkupack (4) zum Motor (7) ein- und auszuschalten,
wobei die Steuerschaltung (8) ferner dazu konfiguriert ist, ein Tastverhältnis der Schaltvorrichtung (81) entsprechend dem Einstellbetrag des Drehzahlverstellschalters (31) zu steuern, ohne Informationen über die Akkuleistung des am Akku-Aufnahmeteil (26) befestigten Akkupacks (4) zu verwenden, sodass, wenn der Einstellbetrag des Drehzahlverstellschalters (31) unverändert ist, der Motor (7) mit einer höheren Drehzahl gedreht wird und sich die Spitzenklinge (3) mit einer höheren Geschwindigkeit hin und her dreht, je höher die Akkuleistung des am Akku-Aufnahmeteil (26) befestigten Akkupacks (4) ist,
wobei die Steuerschaltung (8) Folgendes beinhaltet:
einen Schwellenwertspeicher (821), der verschiedene Temperaturschwellenwerte und die jeweils zugehörigen Nennausgangsspannungen speichert,
einen Temperaturschwellenwert-Erfasser (822), der dazu konfiguriert ist, Informationen über eine Nennausgangsspannung aus einem Informationsspeicher (334) des am Akku-Aufnahmeteil (26) befestigten Akkupacks (4) zu erfassen, und aus dem Schwellenwertspeicher (821) einen Temperaturschwellenwert abzurufen, der mit der in den erfassten Informationen enthaltenen Nennausgangsspannung in Zusammenhang steht,
eine Antriebssteuerung (824), die dazu konfiguriert ist, die Energiezufuhr des Elektromotors (7) einzuschränken, wenn sie ein Signal zur Einschränkung der Energiezufuhr empfängt, und
eine Vergleichseinrichtung (823), die dazu konfiguriert ist, der Antriebssteuerung (824) das Signal zur Einschränkung der Energiezufuhr bereitzustellen, wenn der über den Motortemperatursensor (37) detektierte Temperaturdetektionswert den über den Temperaturschwellenwert-Erfasser (822) erfassten Temperaturschwellenwert überschreitet.

2. Das Elektrowerkzeug (1) nach Anspruch 1, wobei die Akkuleistung jedes der Akkupacks (4) eine Nennausgangsspannung eines entsprechenden Akkupacks (4) ist.

3. Das Elektrowerkzeug (1) nach Anspruch 1 oder 2, ferner umfassend ein Gehäuse (21), das eine Umfassung des Elektrowerkzeugs (1) bildet, wobei
das Gehäuse (21) mit der Spitzenklinge (3), dem oszillierenden Rotationsmechanismus (6), dem Akku-Aufnahmeteil (26) und der Steuerschaltung (8) versehen ist,
wobei das Akku-Aufnahmeteil (26) in einer ersten Fläche (231) auf einer Seite des Gehäuses (21) angeordnet ist, die einem Teil des Gehäuses (21), an dem die Spitzenklinge (3) befestigt ist, in einer ersten Richtung gegenüberliegt.

4. Das Elektrowerkzeug (1) nach Anspruch 3, wobei
das Gehäuse (4) einen Körperabschnitt (22) und einen Basisteil (23) umfasst, wobei der Körperabschnitt (22) mit dem Basisteil (23) versehen ist und der Basisteil (23) über den Umfang des Körperabschnitts (22) hinausragt,
wobei der Akku-Aufnahmeteil (26) in einer zweiten Fläche (231) auf einer dem Körperabschnitt (22) gegenüberliegenden Seite des Basisteils (23) in einer zweiten Richtung vorgesehen ist. wobei die zweite Fläche (231) einen ersten Stützteil (231s) beinhaltet, der mit drei oder mehr Auflagepunkten mit dem Boden in Kontakt kommen kann.

5. Das Elektrowerkzeug (1) nach irgendeinem der Ansprüche von 1 bis 4, ferner umfassend die Akkupacks (4).

6. Das Elektrowerkzeug (1) nach Anspruch 5, wobei
jeder der Akkupacks (4) einen akkuseitigen Anbringungsteil (33) beinhaltet, der am Akku-Aufnahmeteil (26) angebracht werden kann,
eine dritte Fläche (411D) auf einer dem akkuseitigen Anbringungsteil (33) in einer dritten Richtung gegenüberliegenden Seite jedes Akkupacks (4) einen zweiten Stützteil (411s) beinhaltet, der mit drei oder mehr Auflagepunkten mit dem Boden in Kontakt kommen kann.

## Revendications

1. Un outil électrique (1), comprenant :
une lame d'extrémité (3) ;
un mécanisme de rotation oscillante (6) configuré pour faire tourner la lame d'extrémité (3) en va-et-vient autour d'une partie d'axe de rotation (61) ;
un moteur (7) configuré pour entraîner le mécanisme de rotation oscillante (6) ;
une partie de montage de batterie (26) permettant de fixer de manière amovible l'un quelconque des blocs-batteries (4), chacun des blocs-batteries (4) étant configuré pour alimenter le moteur (7) en énergie électrique et présentant des performances de batterie différentes ;
un circuit de commande (8) configuré pour recevoir de l'énergie électrique fournie par le bloc-batterie (4) fixé à la partie de montage de batterie (26) afin de commander le moteur (7) ; et
un commutateur de variation de vitesse (31) configuré pour régler une vitesse à laquelle la lame d'extrémité (3) est entraînée en rotation en va-et-vient, et
un capteur de température de moteur (37) configuré pour détecter une température générée par le moteur (7),
le circuit de commande (8) incluant un dispositif de commutation (81) qui est configuré pour activer et désactiver l'alimentation électrique provenant du bloc-batterie (4) fixé à la partie de montage de batterie (26) vers le moteur (7),
le circuit de commande (8) étant en outre configuré pour commander le rapport cyclique du dispositif de commutation (81) en fonction d'une quantité de réglage du commutateur de variation de vitesse (31), sans utiliser d'informations sur les performances du bloc-batterie (4) fixé à la partie de montage de batterie (26), de manière que, lorsque la quantité de réglage du commutateur de variation de vitesse (31) reste inchangée, le moteur (7) tourne à une vitesse plus élevée et la lame d'extrémité (3) est entraînée en rotation en va-et-vient à une vitesse plus élevée à mesure que le bloc-batterie (4) fixé à la partie de montage de batterie (26) présente des performances de batterie plus élevées,
le circuit de commande (8) incluant
une mémoire de seuils (821) stockant différents seuils de température et des tensions de sortie nominales respectives correspondantes,
un dispositif d'acquisition de seuil de température (822) configuré pour acquérir des informations sur une tension de sortie nominale à partir d'un dispositif de conservation d'informations (334) du bloc-batterie (4) fixé à la partie de montage de batterie (26), et pour acquérir, à partir de la mémoire de seuils (821), un seuil de température lié à la tension de sortie nominale dans les informations acquises,
un dispositif de commande d'entraînement (824) configuré pour limiter l'alimentation électrique du moteur électrique (7) lorsqu'il reçoit un signal de limitation d'alimentation électrique, et
un dispositif de détermination par comparaison (823) configuré pour, lorsque la valeur de détection de température détectée par le capteur de température de moteur (37) dépasse le seuil de température acquis par le dispositif d'acquisition de seuil de température (822), fournir au dispositif de commande d'entraînement (824) le signal de limitation d'alimentation électrique.

2. L'outil électrique (1) d'après la revendication 1, sachant que les performances de chacun des blocs-batteries (4) correspondent à la tension de sortie nominale du bloc-batterie (4) correspondante.

3. L'outil électrique (1) d'après la revendication 1 ou 2, comprenant en outre un boîtier (21) formant une enceinte de l'outil électrique (1), sachant que
le boîtier (21) est muni de la lame d'extrémité (3), du mécanisme de rotation oscillante (6), de la partie de montage de batterie (26) et du circuit de commande (8),
la partie de montage de batterie (26) est prévue dans une première surface (231) située sur un côté du boîtier (21) opposé, dans une première direction, à une partie du boîtier (21) à laquelle la lame d'extrémité (3) est fixée.

4. L'outil électrique (1) d'après la revendication 3, sachant que
le boîtier (4) comprend une portion de corps (22) et une partie de base (23), la portion de corps (22) étant pourvue de la partie de base (23), la partie de base (23) faisant saillie vers l'extérieur d'une périphérie de la portion de corps (22),
la partie de montage de batterie (26) est prévue dans une deuxième surface (231) située sur un côté de la partie de base (23) opposé, dans une deuxième direction, à la portion de corps (22). la deuxième surface (231) incluant une première partie d'appui (231s) apte à être en contact avec le sol en trois points d'appui ou plus.

5. L'outil électrique (1) d'après l'une quelconque des revendications de 1 à 4, comprenant en outre les blocs-batteries (4).

6. L'outil électrique (1) d'après la revendication 5, sachant que
chacun des blocs-batteries (4) inclut une partie d'attache côté batterie (33) pouvant être fixée à la partie de montage de batterie (26),
une troisième surface (411D) située du côté de chaque bloc-batterie (4) opposé, dans une troisième direction, à la partie d'attache côté batterie (33), inclut une deuxième partie d'appui (411s) apte à être en contact avec le sol en trois points d'appui ou plus.
